# EUROPEAN PATENT SPECIFICATION

(11) **EP 0 810 109 B1**
(45) Date of publication and mention of the grant of the patent: **09.05.2001**
(21) Application number: 97201571.3
(22) Date of filing: 28.05.1997
(51) Int. Cl.: B60G 9/00, B60G 11/46

(54) **Axle construction for a vehicle, and axle pad and clamping plate therefor**
Achsenkonstruktion für Fahrzeuge und Achseneingriffsplatte und Spannplatte dafür
Construction d'essieu pour véhicule ,et bride d'essieu et plaque de serrage pour celle-là

(30) Priority: 28.05.1996 NL 1003214
(43) Date of publication of application: 03.12.1997
(73) Proprietor: WEWELER NEDERLAND B.V., NL-7300 AC Apeldoorn (NL)
(72) Inventor: Aalderink, Derk Geert, 7245 NV Laren (NL)
(74) Representative: de Bruijn, Leendert C.

(56) References cited:
- EP-A- 0 533 146
- DE-U- 9 305 039
- US-A- 1 377 430
- US-A- 1 539 070
- US-A- 1 643 970
- US-A- 3 231 258
- US-A- 3 386 724
- US-A- 3 437 333
- US-A- 4 858 949
- US-A- 5 013 063
- US-A- 5 346 247
- US-A- 5 427 404

## Description

The invention relates to an axle construction for a vehicle, comprising an axle body having an essentially square or rectangular cross-section, as well as two suspension arms supported with respect to the vehicle chassis by means of air bellows, which suspension arms are each mounted, at one end, in a spring bracket which is fixed to the vehicle chassis and, at the other end, are each fixed to the axle body, each suspension arm and the axle body being held pressed against one another, with an axle pad clamped between them, by means of straps or strap bolts which interact with, in each case, one clamping plate and one strap plate, which axle pad has at least two cheeks which bound the axle body in the lateral direction and which each define a bearing face.

An axle construction of this type is disclosed in EP-A 618 095. In this known axle construction, an axle pad is used which initially is slightly kinked and which on tightening the straps is forced to assume a straight, flat position. With this arrangement, the cheeks formed on said axle pad must clamp the axle body firmly between them, with the aim of obtaining a connection with angular rigidity between axle body and suspension arms.

Said known axle construction has various disadvantages. First of all, it is less suitable for axle constructions having an axle body of relatively small wall thickness. With a thin-walled axle body of this type, there is a high risk that the wall on which the kink of the initially kinked axle pad bears becomes compressed as soon as the straps are tightened. A further disadvantage is that clamping of the axle body is possible only at one side of the axle body at the location of the axle pad, and not also at the opposing side at the location of the strap plate, as a result of which the angular rigidity of the connection is still restricted.

A further significant disadvantage of the known axle construction is that it is sensitive to variations in the axle dimensions. As soon as the axle pad has been pressed flat no further adjustment to an axle body which is toot small can take place.

The aim of the invention is, therefore, to provide an axle construction which is also suitable for thin-walled axles and which offers better angular rigidity. Said aim is achieved in that each axle pad has at least two seating faces for the axle body and on the side facing the suspension arm has bearing surfaces which are located further towards the outside than the seating faces facing the axle body, which seating faces delimit a relatively easily bendable region of the axle pad, such that on tightening the straps the bearing faces of the axle pad are clamped against the axle body.

The axle pad engages on the firmest parts of the axle body, that is to say at the location of the edge regions thereof. The flat wall of the axle body located between said edge regions is not subjected to stress by axle pad since this is the location of the recessed region some distance away from said wall. Said recessed region can, moreover, be of limited thickness, since it does not have to be dimensioned for bending and is only required to transmit tensile forces. The recessed region thus forms a relatively readily bendable portion of the axle pad, such that on tightening the straps the relevant cheek or cheeks is/are firmly pressed against the side of the axle body.

As already mentioned, the bearing faces must be bent towards and against the axle body under the influence of the tensile force built up in the straps on tightening. The bending moments needed to obtain said bending are obtained by the bearing surfaces which are located further towards the outside than the seating faces facing the axle body, such that on tightening the straps the bearing faces of the axle pad are clamped against the axle body.

According to a preferred embodiment, each axle pad has at least two cheeks which extend alongside the axle body and define, respectively, a first and a second bearing face for the two transverse sides of the axle body which extend transversely to the seating side. The cheeks of the axle pad constructed in this way are a distance apart such that the axle body can initially fit between them with some play. By this means it is ensured that the seating faces bear in the correct manner on the relevant side of the axle body. On tightening the straps, all pairs of cheeks are then moved towards one another such that the desired clamping is obtained.

In order to obtain stable clamping of the axle body, the seating faces and the bearing faces of the axle pad must engage on either side of the curved edge regions of said axle body. If engagement takes place exactly at said curved edge regions, as is the case in DE-C 4 232 778, there is a risk that the axle body will start to tilt, despite high clamping forces. In order to prevent this problem, according to the invention a recessed region is preferably provided between each seating face and the adjoining bearing face.

Said recessed regions provide a gap, at the location of the edges of the axle body, which is sufficiently large that contact at said edges is always avoided in favour of stable support at the bearing faces. According to a simple measure, recessed regions between, in each case, a seating face and a bearing face can have a greater curvature than the associated corner region between the seating side and transverse side of the axle body.

The invention also relates to an axle pad for the axle construction described above.

Although the above description relates to an axle construction in which the clamping plate and axle pad are in direct contact with the axle body, this is not essential. A standard set of clamping plates and axle pads can still be used with an axle body of smaller dimensions, filler plates or filler dishes then being fitted as filling between the axle body and clamping plates and axle pads.

The invention will be explained in more detail below with reference to an illustrative embodiment shown in the figures.

Figure 1 shows a side view of an axle construction according to the invention.

Figure 2 shows the axle construction on a larger scale and partly in cross-section.

Figure 3 shows the view along III-III in Figure 2.

Figure 4 shows a detail of the axle construction, in which the straps are still missing.

Figure 5 shows the view along V-V in Figure 4.

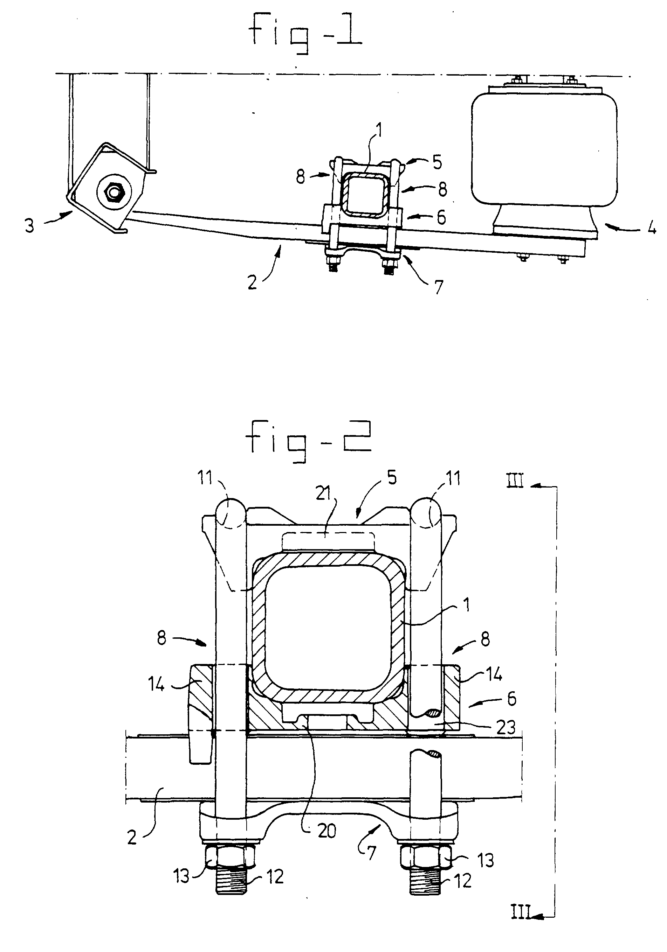

The axle construction shown in Figure 1 comprises an axle body 1, which is shown in cross-section and consists of an essentially square tube. Said axle body is fixed at both ends to a suspension arm 2, one end of which is mounted in a spring bracket 3 which, in turn, is fixed to a vehicle chassis, which is not shown. At the other end, the suspension arm is fixed to air bellows 4, likewise fixed to the vehicle chassis, which is not shown.

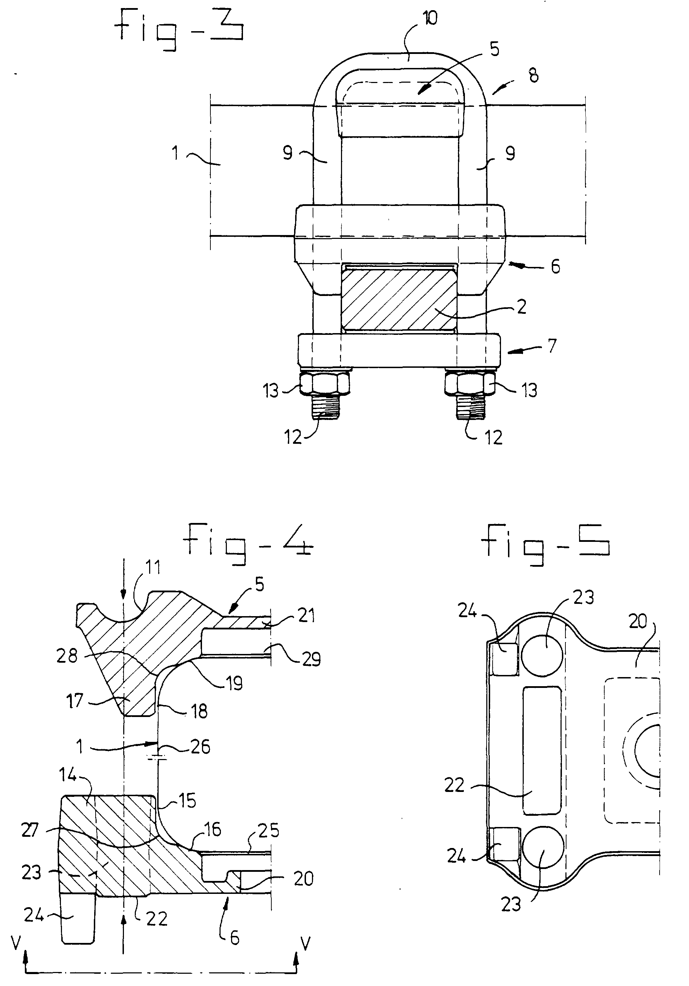

As is shown in more detail in Figures 2 and 3, the fixing between axle body 1 and suspension arm 2 comprises a clamping plate 5, an axle pad 6, strap plate 7 and two straps 8. The straps have parallel legs 9 and are accommodated, with the linking piece 10 joining the legs, in recesses 11 in the clamping plate 5. The threaded ends 12 are provided with nuts 13, by means of which the axle body 1 and the suspension arm 2 are held pressed firmly against one another, clamping the axle pad 6 between them, via strap plate 7.

As is also shown in Figure 4, which shows the situation before the straps have been fitted and tightened, the axle pad 6 has two cheeks 14 (one of which is shown in cross-section in Figure 1), which cheeks, on the side 26 facing the axle body 1, define a bearing face 15. This axle pad also has two seating faces 16, on which the seating side 25 of the axle body 1 rests.

The clamping plate 5 also has two cheeks 17, each of which defines a bearing face 18. By means of seating faces 19, the clamping plate 5 bears on the seating side 29 of the axle body 1.

The cheeks 14 and 17, respectively, of axle pad 6 and clamping plate 5, respectively, are joined to each other by recessed regions 20 and 21, respectively. Said region bends relatively easily compared with the cheeks 14 and 17, respectively. The purpose of this is as follows:

As is shown in Figure 4, the bearing faces 15 and 18, respectively, are a small distance away from the axle body 1 when the straps have still not been fitted. As soon as the straps are tightened, the forces indicated by arrows in Figure 4 are generated. The force on the clamping plate 11 is supplied by the linking section 10 of the strap concerned. The force on the axle pad 6 is delivered at the location of the bearing surfaces 22, which are also shown in Figure 5. By means of said bearing surfaces 22, the axle pad bears against the suspension arm 2.

As a consequence of said locations where the tensioning forces act, the cheeks 14 and 17, respectively, are, on tightening the straps, tilted about the location where their seating faces 16 and 19, respectively, bear against the seating sides 25 and 29, respectively, of the axle body 1. Said tilting movement is made possible by the relatively flexible regions 20 and 21, respectively. During said movement, the cheeks 14 and 17, respectively, tilt until their bearing faces 15, 18 come into contact with the transverse side 26 of the axle body 1, the position shown in Figure 2 then being achieved.

The pretensioning in the straps required to tilt the cheeks 14, 17 is relatively low, so that it is always ensured that the correct clamping is obtained at a certain tightening moment, irrespective of the axle tolerances.

A further advantage is that the walls of the axle body do not have to be completely flat in order still to obtain good clamping.

In this position, the axle body 1 is clamped very firmly. Said clamping is suitable both for absorbing torsional stresses between axle and suspension arm and for absorbing stresses in the plane defined by axle body 1 and suspension arm 2. A fixing with a high angular rigidity is thus obtained in said plane.

In Figures 4 and 5, holes 23 are also shown, through which holes the legs 9 of the straps 8 extend. Projections 24, which extend alongside the suspension arm 2, can also be distinguished.

Needless to say, the axle can also be accommodated below the suspension arms.

As an alternative to air bellows, it is possible to use a hydraulic spring system with hydraulic cylinders on the suspension arms, which are connected to an accumulator.

## Claims

1. Axle construction for a vehicle, comprising an axle body (1) having an essentially square or rectangular cross-section, as well as two suspension arms (2) supported with respect to the vehicle chassis by means of air bellows (4), which suspension arms are each mounted, at one end, in a spring bracket (3) which is fixed to the vehicle chassis and, at the other end, are each fixed to the axle body (1), each suspension arm (2) and the axle body (1) being held pressed against one another, with an axle pad (6) clamped between them, by means of straps or strap bolts (8) which interact with, in each case, one clamping plate (5) and one strap plate (7), which axle pad (6) has at least two cheeks (14,17) which bound the axle body (1) in the lateral direction and which each define a bearing face (15,18), characterised in that each axle pad (6) has at least two seating faces (16) for the axle body (1) and on the side facing the suspension arm (2) has bearing surfaces (22) which are located further towards the outside than the seating faces (16) facing the axle body (1), which seating faces (16) delimit a relatively easily bendable region (20) of the axle pad (6), such that on tightening the straps (8) the bearing faces (15) of the axle pad (6) are clamped against the axle body (1).

2. Axle construction according to Claim 1 or 2, wherein each axle pad (6) has at least two cheeks (14) which extend alongside the axle body (1) and define, respectively, a first and a second bearing face (15) for the two transverse sides (26) of the axle body (1) which extend transversely to the seating side (25).

3. Axle construction according to Claim 2, wherein a recessed (27, 28) region is located between each seating face (16) and the adjoining bearing face (15).

4. Axle construction according to Claim 3, wherein the recessed regions (27) between, in each case, a seating face (16) and a bearing face (15) have a greater curvature than the associated corner region between the seating side (25) and transverse side (26) of the axle body (1).

5. Axle construction according to one of the preceding claims, wherein each clamping plate (5) has bearing ridges (11) for the straps (8) on that side of said plates remote from the axle body (1), which bearing ridges (11) are located further towards the outside than the seating faces (19) facing the axle body, such that on tightening the straps (8) the bearing faces (18) of the clamping plate (5) are clamped against the axle body (1).

6. Axle pad (6) for an axle construction according to one of the preceding claims. comprising at least two seating faces (16) for that seating side (25) of an axle body (1) which faces the axle pad (6), and on the side facing the suspension ar (2) has bearing surfaces (22) which are located further towards the outside thai the seating faces (16) facing the axle body (1), which seating faces (16) are located in the vicinity of the longitudinal edges of said seating side (25) and delimit a recessed region (20) of the axle pad (6).

7. Axle pad (6) according to Claim 6, wherein at least one cheek (14) is provided which defines a bearing face (15), oriented transversely to the seating faces (16), for the adjacent transverse side (26) of the axle body (1) extending transversely to the seating side (25).

8. Axle pad (6) according to Claim 6 or 7, wherein at least two cheeks (14) are provided, both of which define, in each case, a bearing face (15) oriented transversely to the seating faces (16), for the two transverse sides (26) of the axle body (1) extending transversely to the seating side (25).

## Patentansprüche

1. Achsenkonstruktion für ein Fahrzeug, die einen Achsenkörper (1) mit einem im Wesentlichen quadratischen oder rechteckigen Querschnitt sowie zwei Aufhängungsarme (2) umfasst, die in Bezug auf das Fahrwerk des Fahrzeugs mit Luftfederbalgen (4) gelagert sind, wobei die Aufhängungsarme jeweils an einem Ende in einem Federbock (3) angebracht sind, der an dem Fahrwerk des Fahrzeugs befestigt ist, und an dem anderen Ende jeweils an dem Achsenkörper (1) befestigt sind, wobei jeder Aufhängungsarm (2) und der Achsenkörper (1) aneinandergepresst gehalten werden und zwischen ihnen ein Achsenblock (6) mit Bügeln bzw. Bügelschrauben (8) eingeklemmt ist, die in jedem Fall mit einer Klemmplatte (5) und einer Bügelplatte (7) zusammenwirken, wobei der Achsenblock (6) wenigstens zwei Backen (14,17) hat, die den Achsenkörper (1) in der Querrichtung fixieren und die jeweils eine Lagerfläche (15,18) aufweisen, **dadurch gekennzeichnet,** dass jeder Achsenblock (6) wenigstens zwei Anlageflächen (16) für den Achsenkörper (1) aufweist und auf der Seite, die dem Aufhängungsarm (2) zugewandt ist, Lagerflächen (22) aufweist, die weiter außen liegen als die Anlageflächen (16), die dem Achsenkörper (1) zugewandt sind, wobei die Anlageflächen (16) einen relativ leicht biegbaren Bereich (20) des Achsenblocks (6) begrenzen, so dass beim Anziehen der Bügel (8) die Lagerflächen (15) des Achsenblocks (6) an den Achsenkörper (1) geklemmt werden.

2. Achsenkonstruktion nach Anspruch 1, wobei jeder Achsenblock (6) wenigstens zwei Backen (14) hat, die sich an dem Achsenkörper (1) entlang erstrecken und eine erste bzw. eine zweite Lagerfläche (15) für die beiden Querseiten (26) des Achsenkörpers (1) aufweisen, die sich quer zu der Anlageseite (25) erstrecken.

3. Achsenkonstruktion nach Anspruch 2, wobei ein vertiefter Bereich (27,28) zwischen jeder Anlagefläche (16) und der angrenzenden Lagerfläche (15) angeordnet ist.

4. Achsenkonstruktion nach Anspruch 3, wobei die vertieften Bereiche (27), die in jedem Fall zwischen einer Anlagefläche (16) und einer Lagerfläche (15) angeordnet sind, eine größere Krümmung haben als der dazugehörige Eckenbereich zwischen der Anlageseite (25) und der Querseite (26) des Achsenkörpers (1).

5. Achsenkonstruktion nach einem der vorangehenden Ansprüche, wobei jede Klemmplatte (5) Lagernden (11) für die Bügel (8) auf der Seite der Platten aufweist, die von dem Achsenkörper (1) entfernt ist, wobei die Lagerrillen (11) weiter außen liegen als die Anlageflächen (19), die dem Achsenkörper zugewandt sind, so dass beim Anziehen der Bügel (8) die Lagerflächen (18) der Klemmplatte (5) an dem Achsenkörper (1) festgeklemmt werden.

6. Achsenblock für eine Achsenkonstruktion nach einem der vorangehenden Ansprüche, der zumindest zwei Anlageflächen (16) für die Anlageseite (25) eines Achsenkörpers (1) umfasst, die dem Achsenblock (6) zugewandt ist, und auf der Seite, die dem Aufhängungsarm (2) zugewandt ist, Lagerflächen (22) aufweist, die weiteraußen angeordnet sind als die Anlageflächen (16), die dem Achsenkörper (1) zugewandt sind, wobei sich die Anlageflächen (16) in der Nähe der Längskanten der Anlageseite (25) befinden und einen vertieften Bereich (20) des Achsenblocks (6) begrenzen.

7. Achsenblock (6) nach Anspruch 6, wobei wenigstens eine Backe (14) vorhanden ist, die eine Lagerfläche (15), die quer zu den Anlageflächen (16) ausgerichtet ist, für die angrenzende Querseite (26) des Achsenkörpers (1) aufweist, die sich quer zu der Anlageseite (25) erstreckt.

8. Achsenblock (6) nach Anspruch 6 oder 7, wobei wenigstens zwei Backen (14) vorgesehen sind, die beide in jedem Fall eine Lagerfläche (15) bilden, die quer zu den Anlageflächen (16) ausgerichtet ist, für die beiden Querseiten (26) des Achsenkörpers (1) die sich quer zu der Anlageseite (25) erstrecken.

## Revendications

1. Structure d'essieu pour un véhicule, comprenant un corps d'essieu (1) possédant une section transversale essentiellement carrée ou rectangulaire, ainsi que deux bras de suspension (2) supportés par rapport au châssis du véhicule au moyen de soufflets (4), lesquels bras de suspension sont montés chacun, à une extrémité, dans une console (3) pour ressort, qui est fixée sur le châssis du véhicule, et sont fixés chacun, à l'autre extrémité, au corps d'essieu (1), chaque bras de suspension (2) et le corps d'essieu (1) étant maintenus repoussés l'un contre l'autre, avec une bride d'essieu (6) serrée entre eux, au moyen d'étriers ou de boulons-étriers (8), qui coopèrent, dans tous les cas, avec une plaque de serrage (5) et une plaque d'étrier (7), laquelle bride d'essieu (6) comporte au moins deux joues (14, 17), qui délimitent le corps d'essieu (1) dans la direction latérale et qui définissent chacun une face d'appui (15, 18), caractérisée en ce que chaque bride d'essieu (6) comporte au moins deux faces de siège (16) pour le corps d'essieu (1) et possède, sur le côté tourné vers le bras de suspension (2), des surfaces d'appui (22) qui sont disposées dans une position située plus à l'extérieur que les faces de siège (16) qui sont tournées vers le corps d'essieu (1), lesquelles faces de siège (16) délimitent une partie (20) pouvant être relativement aisément coudée de la bride d'essieu (6), de sorte que lors du serrage des étriers (8), les faces d'appui (15) de la bride d'essieu (6) sont serrées contre le corps d'essieu (1).

2. Structure d'essieu selon la revendication 1, dans laquelle chaque bride d'essieu (6) possède au moins deux joues (14) qui s'étendent le long du corps d'essieu (1) et définissent respectivement des première et seconde faces d'appui (15) pour les deux côtés transversaux (26) du corps d'essieu (1), qui s'étendent transversalement par rapport à la face de siège (25).

3. Structure d'essieu selon la revendication 2, dans laquelle une région en renfoncement (27, 28) est située entre chaque face d'appui (16) et la face d'appui adjacente (15).

4. Structure d'essieu selon la revendication 3, dans laquelle les régions en renfoncement (27), qui sont situées dans chaque cas entre une face de siège (16) et une face d'appui (15), possèdent une courbure supérieure à celle de la région d'angle associée entre le côté de siège (25) et le côté transversal (26) du corps d'essieu (1).

5. Structure d'essieu selon l'une des revendications précédentes, dans laquelle chaque plaque de serrage (5) comporte des nervures d'appui (11) pour les étriers (8) sur le côté desdites plaques qui est distant du corps d'essieu (1), lesquelles nervures de support (11) sont situées plus à l'extérieur que les faces de siège (19) tournées vers le corps de l'essieu, de sorte que lors du serrage des étriers (8), les faces d'appui (18) de la plaque de serrage (5) sont serrées contre le corps d'essieu (1).

6. Bride d'essieu (6) pour une structure d'essieu selon l'une des revendications précédentes, comprenant au moins deux faces de siège (16) pour le côté formant siège (25) d'un corps d'essieu (1), qui est tourné vers la bride d'essieu (6), et possède, sur le côté tourné vers le bras de suspension (2), des surfaces d'appui (22), qui sont situées plus à l'extérieur que les faces de siège (16) tournées vers le corps d'essieu (1), lesquelles faces de siège (16) sont disposées au voisinage des bords longitudinaux dudit côté formant siège (25) et délimitent une partie en renfoncement (20) de la bride d'essieu (6).

7. Bride d'essieu selon la revendication 6, dans lequel il est prévu au moins une joue (14), qui définit une face d'appui (15), orientée transversalement par rapport aux faces de siège (16), pour le côté transversal adjacent (26) du corps d'essieu (1) qui s'étend transversalement par rapport au côté formant siège (25).

8. Bride d'essieu selon la revendication 6 ou 7, dans lequel sont prévues au moins deux joues (14), qui définissent toutes deux, dans tous les cas, une face d'appui (15) orientée transversalement par rapport aux faces de siège (16) pour les deux côtés transversaux (26) du corps d'essieu (1) qui s'étendent transversalement par rapport au côté de siège (25).
